# EUROPÄISCHE PATENTSCHRIFT

(11) **EP 3 507 176 B1**
(45) Veröffentlichungstag und Bekanntmachung des Hinweises auf die Patenterteilung: **13.07.2022**
(21) Anmeldenummer: 17765357.3
(22) Anmeldetag: 24.08.2017
(51) Int. Cl.: B62J 11/00, F16M 13/02, F16M 11/04, B62J 11/04, F16B 1/00

(54) **VERSCHLUSSVORRICHTUNG ZUM VERBINDEN EINES BEHÄLTERS Z.B. AN EINEM FAHRRAD**
CLOSURE DEVICE FOR CONNECTING A CONTAINER E.G. TO A BICYCLE
DISPOSITIF DE FERMETURE PERMETTANT DE RACCORDER UN RÉCIPIENT À, PAR EXEMPLE UNE BICYCLETTE

(30) Priorität: 31.08.2016 DE 102016216422
(43) Veröffentlichungstag der Anmeldung: 10.07.2019
(60) Teilanmeldung: 20196134.9
(73) Patentinhaber: Fidlock GmbH, 30659 Hannover (DE)
(72) Erfinder: FIEDLER, Joachim, 30519 Hannover (DE); BOTKUS, Breido, 30175 Hannover (DE); RICHTER, Friedemann, 30173 Hannover (DE); SPINDLER, Jürgen, 93055 Regensburg (DE)
(74) Vertreter: Maikowski & Ninnemann Patentanwälte Partnerschaft mbB
(86) Internationale Anmeldenummer: PCT/EP2017/071349
(87) Internationale Veröffentlichungsnummer: WO 2018/041716

(56) Entgegenhaltungen:
- WO-A1-2010/084191
- CN-Y- 2 571 651
- DE-A1-102008 019 063
- US-A1- 2004 173 719
- US-A1- 2011 147 424
- Fidlock: "Launch of our brand new booth at the Eurobike 2016! New Design, lots of fabulous fasteners to see and try! Hall A4 booth 404", , 30. August 2016 (2016-08-30), XP055437515, EUROBIKE Friedrichshafen 2016 Gefunden im Internet: URL:https://www.facebook.com/fidlock/photo s/a.1048587538524306.1073741838.5045370395 96028/1048587808524279/?type=3&theater [gefunden am 2017-12-22]

## Beschreibung

Die Erfindung betrifft ein Fahrrad mit einem Behälter, der mit einem Rahmen des Fahrzeugs verbindbar ist, und einer Verschlussvorrichtung.

Eine derartige Verschlussvorrichtung umfasst ein erstes Verschlussteil, das an dem Rahmen anzuordnen ist und ein erstes Magnetelement aufweist, und ein zweites Verschlussteil, das dem Behälter zugeordnet ist und ein zweites Magnetelement aufweist, wobei das zweite Verschlussteil in eine Schließrichtung an das erste Verschlussteil ansetzbar und in einer Schließstellung mechanisch mit dem ersten Verschlussteil verrastet ist.

Eine derartige Verschlussvorrichtung kann beispielsweise zum Befestigen eines Behälters in Form einer Trinkflasche an dem Rahmen eines Fahrrads dienen.

Bei einem aus der WO 2012/151320 A9 bekannten Verschluss wird ein Klemmbügel an einem Rahmen befestigt und weist Magnetelemente auf, die zum Befestigen einer Trinkflasche an dem Rahmen mit einem magnetisch aktiven Ring der Trinkflasche zusammenwirken.

Zudem ist bekannt, Behälter in Form von Trinkflaschen rastend an einem Rahmen eines Fahrzeugs zu befestigen, wobei in diesem Zusammenhang auch in Erwägung gezogen worden ist, magnetische Elemente zum Sichern der Verbindung einzusetzen.

Generell soll eine Verschlussvorrichtung, mit der ein Behälter (beispielsweise eine Trinkflasche) an dem Rahmen eines Fahrzeugs (insbesondere eines Zweirads oder eines Dreirads) festgelegt werden kann, einfach zu bedienen sein. Der Behälter soll platzsparend an dem Fahrzeug untergebracht werden können, wobei beispielsweise in einer Rahmenöffnung eines Fahrradrahmens nur ein beschränkter Platz zur Verfügung steht. Die Verschlussvorrichtung soll in geöffneter Stellung einen geringen Bauraum sowohl an dem Fahrzeug als auch an dem Behälter aufweisen, damit die Verschlussteile der Verschlussvorrichtung nicht stören. Wünschenswert ist zudem, die Verschlussvorrichtung kostengünstig auszugestalten, wobei insbesondere auch in Betracht zu ziehen ist, dass Behälter beispielsweise in Form von Trinkflaschen nach begrenzter Benutzungsdauer ausgetauscht werden müssen.

Aus der US 2011/0147424 A1, die alle Merkmale des Präambels des Anspruchs 1 offenbart, ist eine Befestigungseinrichtung für eine Fahrradflasche an einem Fahrrad bekannt, bei der ein Verschlussteil, an das eine Fahrradflasche angesetzt werden kann, an einem Fahrradrahmen befestigt ist. Die Fahrradflasche weist einen Magneten auf, über den die Fahrradflasche in angesetzter Stellung an dem Verschlussteil gehalten ist.

Aus der US 2004/0173719 A1 ist eine Befestigungseinrichtung für eine Fahrradflasche bekannt, bei der die Fahrradfalsche magnetisch gehalten ist.

Die DE 10 2008 019 063 A1 beschreibet eine mechanisch-magnetische Verbindungskonstruktion, die durch Magnetkraftunterstützung schließt und als Verschluss an Taschen oder Rucksäcken eingesetzt werden kann.

Aufgabe der vorliegenden Erfindung ist es, ein Fahrrad mit einem Behälter und einer Verschlussvorrichtung bereitzustellen, bei dem die Verschlussvorrichtung einfach handhabbar ist, ein zuverlässiges Befestigen des Behälters an dem Rahmen des Fahrrads ermöglicht und zudem vielfältig einsetzbar ist.

Diese Aufgabe wird durch eine Verschlussvorrichtung mit den Merkmalen des Anspruchs 1 gelöst.

Das zweite Verschlussteil ist lösbar mit dem Behälter verbindbar. Eines der Verschlussteile weist zumindest ein Sperrstück und das andere der Verschlussteile zumindest ein Verriegelungselement auf, wobei das zumindest eine Sperrstück in der Schließstellung in das Verriegelungselement derart eingreift, dass das zweite Verschlussteil entgegen der Schließrichtung an dem ersten Verschlussteil gehalten ist, wobei das zweite Verschlussteil durch Bewegen in eine Öffnungsrichtung, die sich von der Schließrichtung unterscheidet, von dem ersten Verschlussteil lösbar ist, wobei die Öffnungsrichtung einer um die Schließrichtung gerichteten Drehrichtung entspricht.

Die vorliegende Verschlussvorrichtung ist modular zusammen mit ganz unterschiedlichen Behältern einsetzbar. Dadurch, dass das zweite Verschlussteil lösbar mit dem Behälter verbunden werden kann, kann die Verschlussvorrichtung zum Verbinden unterschiedlicher Behälter mit dem Rahmen eines Fahrzeugs, insbesondere mit dem Rahmen eines Fahrrads, verwendet werden. Insbesondere ermöglicht die lösbare Verbindung des zweiten Verschlussteils mit dem Behälter, den Behälter auszutauschen und durch einen anderen Behältern zu ersetzen, der gleicher Art oder auch ganz unterschiedlicher Art sein kann.

Das zweite Verschlussteil kann insbesondere formschlüssig mit einem Adapterteil des Behälters verbindbar sein. Zum Lösen der Verbindung des zweiten Verschlussteils mit dem Behälter kann der Formschluss aufgehoben werden, sodass das zweite Verschlussteil von dem Adapterteil und damit von dem Behälter getrennt werden kann. Das Adapterteil ist hierbei fest mit dem Behälter verbunden, z.B. mit dem Behälter verschweißt oder auf sonstige Weise an dem Behälter festgelegt oder auch einstückig in den Behälter integriert.

In einer Ausgestaltung weist das zweite Verschlussteil einen Körper und ein verstellbar (insbesondere verdrehbar) an dem Körper angeordnetes Befestigungselement auf. Das Befestigungselement dient dazu, in einer ersten Stellung - bei an den Behälter angesetztem, zweitem Verschlussteil - das zweite Verschlussteile mit dem Behälter zu verbinden. Aus dieser ersten Stellung kann das Befestigungselement heraus bewegt werden, um die Verbindung zwischen dem Behälter und dem zweiten Verschlussteil zu lösen, sodass durch Verstellen des Befestigungselements, insbesondere durch Verdrehen des Befestigungselements, das zweite Verschlussteil auf einfache Weise von dem Behälter getrennt werden kann, um das zweite Verschlussteil beispielsweise mit einem anderen Behälter zu verbinden.

Behälter beispielsweise in Form von Trinkflaschen sind generell kostengünstig verfügbar und müssen regelmäßig, nach längerem Gebrauch, ausgetauscht werden. Dadurch, dass das zweite Verschlussteil lösbar mit dem Behälter verbunden ist, bedingt der Austausch des Behälters nicht, dass auch die Verschlussvorrichtung ausgetauscht werden muss. Vielmehr kann die Verschlussvorrichtung weiterverwendet werden, indem das zweite Verschlussteil mit einem anderen Behälter verbunden wird.

Das Befestigungselement kann beispielsweise in einfacher Weise händisch oder unter Verwendung eines einfachen Werkzeugs, zum Beispiel eines Schraubendrehers oder einer Münze oder dergleichen, verstellbar sein. Beispielsweise kann das Befestigungselement einen Schlitz aufweisen, in den mit einer Münze eingegriffen werden kann, um das Befestigungselement zu verdrehen.

Um die Verbindung mit dem Behälter herzustellen, kann das Befestigungselement beispielsweise einen Arretiersteg aufweisen, der durch Verstellen, insbesondere Verdrehen, formschlüssig mit zumindest einem Arretierelement auf Seiten des Adapterteils des Behälters in Eingriff gebracht werden kann.

Die Verschlussteile der Verschlussvorrichtung können in die Schließrichtung aneinander angesetzt werden, um die Verschlussvorrichtung zu schließen und die Verschlussteile miteinander zu verbinden. Das Schließen der Verschlussvorrichtung wird hierbei durch die Magnetelemente der Verschlussteile magnetisch unterstützt, sodass bei Ansetzen der Verschlussteile aneinander die Verschlussteile magnetisch aufeinander zu gezogen werden und somit in ihre Schließstellung gelangen.

In der Schließstellung sind die Verschlussteile mechanisch miteinander verrastet, sodass die Verschlussteile belastbar und formschlüssig aneinander gehalten werden. Hierzu weist eines der Verschlussteile ein Sperrstück und das andere der Verschlussteile ein Verriegelungselement auf, die in der Schließstellung derart ineinander eingreifen, dass das zweite Verschlussteil entgegen der Schließrichtung an dem ersten Verschlussteil festgelegt ist.

Während das Sperrstück beispielsweise als vorstehender Schließzapfen ausgebildet sein kann, kann das Verriegelungselement beispielsweise als quer zur Schließrichtung elastisch federndes Bauteil ausgebildet sein. Bei Schließen der Verschlussvorrichtung kann somit ein Rastvorsprung des Sperrstücks auf einen Rastvorsprung des Verriegelungselements auflaufen und das Verriegelungselement auf diese Weise elastisch federnd beiseite drängen, bis das Sperrstück formschlüssig mit dem Verriegelungselement in Eingriff schnappt. In der Schließstellung stehen die Rastvorsprünge des Sperrstücks und des Verriegelungselements dann miteinander in Eingriff, sodass die Verschlussteile formschlüssig aneinander gehalten sind.

In einer Ausgestaltung kann das Verriegelungselement beispielsweise ringförmig ausgebildet sein, wobei das Verriegelungselement beispielsweise an einem Umfangsort durch eine Öffnung geöffnet ist, durch die hindurch das Sperrstück zum Öffnen der Verschlussvorrichtung bewegt werden kann. Das Verriegelungselement verwirklicht somit einen C-Ring, der in der Schließstellung das Sperrstück zumindest teilweise umgreift und dadurch formschlüssig hält. Zum Öffnen kann das Sperrstück durch die an einem Umfangsort des Verriegelungselements gebildete Öffnung hindurch bewegt werden, sodass das Sperrstück außer Eingriff von dem Verriegelungselement gebracht und dadurch von dem Verriegelungselement gelöst werden kann.

Das Öffnen der Verschlussvorrichtung zum Lösen der Verschlussteile voneinander erfolgt dadurch, dass das zweite Verschlussteil in eine Öffnungsrichtung, die sich von der Schließrichtung unterscheidet, zu dem ersten Verschlussteil bewegt wird. Durch die Bewegung in die Öffnungsrichtung kann die Verrastung zwischen den Verschlussteilen aufgehoben werden, sodass die Verschlussteile voneinander gelöst werden können und der dem zweiten Verschlussteil zugeordnete Behälter somit von dem Rahmen des Fahrzeugs entnommen werden kann.

Darunter, dass die Öffnungsrichtung sich von der Schließrichtung unterscheidet, ist vorliegend zu verstehen, dass die Öffnungsrichtung in eine unterschiedliche Richtung als die Schließrichtung weist und insbesondere auch nicht entgegen der Schließrichtung gerichtet ist. Die Öffnungsrichtung kann beispielsweise in einer quer zur Schließrichtung erstreckten Ebene liegen und z.B. durch eine um die Schließrichtung gerichtete Drehrichtung verwirklicht sein.

Das Schließen der Verschlussvorrichtung kann somit dadurch erfolgen, dass die Verschlussteile in die Schließrichtung aneinander angesetzt werden. Das Öffnen der Verschlussvorrichtung erfolgt dann dadurch, dass die Verschlussteile um die Schließrichtung zueinander verdreht werden, um auf diese Weise die Verrastung zwischen den Verschlussteile aufzuheben.

Um eine einfache, leichtgängige Handhabung zum Öffnen der Verschlussvorrichtung zu gewährleisten, kann eines der Verschlussteile beispielsweise einen Drehzapfen aufweisen, der in der Schließstellung in eine Drehöffnung des anderen Verschlussteils eingreift und die Verschlussteile entlang der (um die Schließrichtung gerichteten) Öffnungsrichtung drehbar aneinander lagert. Zum Öffnen können die Verschlussteile somit um den Drehzapfen herum zueinander verdreht werden, sodass die Öffnungsbewegung geführt ist. Insbesondere kann auf diese Weise ein Verkanten der Verschlussteile zueinander beim Öffnen vermieden werden.

Der Drehzapfen kann, in einer konkreten Ausgestaltung, beispielsweise an dem ersten Verschlussteil ausgebildet sein und entlang der Schließrichtung von einem Körper des ersten Verschlussteils vorstehen. Die Drehöffnung kann demgegenüber beispielsweise an dem zweiten Verschlussteil ausgebildet sein, beispielsweise in dem an dem zweiten Verschlussteil angeordneten Befestigungselement, über das das zweite Verschlussteil lösbar mit dem Behälter verbunden ist.

In einer Ausgestaltung können das erste Verschlussteil und das zweite Verschlussteil beispielsweise jeweils zwei Magnetelemente, die durch Permanentmagnete ausgebildet sind, aufweisen. Die Magnetelemente eines jeden Verschlussteils sind quer zur Schließrichtung zueinander beabstandet, wobei die Magnetelemente des ersten Verschlussteils mit den Magnetelementen des zweiten Verschlussteils beim Schließen magnetisch anziehend Der Drehzapfen kann, in einer konkreten Ausgestaltung, beispielsweise an dem ersten Verschlussteil ausgebildet sein und entlang der Schließrichtung von einem Körper des ersten Verschlussteils vorstehen. Die Drehöffnung kann demgegenüber beispielsweise an dem zweiten Verschlussteil ausgebildet sein, beispielsweise in dem an dem zweiten Verschlussteil angeordneten Befestigungselement, über das das zweite Verschlussteil lösbar mit dem Behälter verbunden ist.

In einer Ausgestaltung können das erste Verschlussteil und das zweite Verschlussteil beispielsweise jeweils zwei Magnetelemente, die durch Permanentmagnete ausgebildet sind, aufweisen. Die Magnetelemente eines jeden Verschlussteils sind quer zur Schließrichtung zueinander beabstandet, wobei die Magnetelemente des ersten Verschlussteils mit den Magnetelementen des zweiten Verschlussteils beim Schließen zusammenwirken und somit das Schließen der Verschlussvorrichtung magnetisch unterstützen.

Die Verschlussteile werden somit beim Ansetzen selbsttätig zueinander hingezogen, sodass das Schließen der Verschlussvorrichtung, in einer vorteilhaften Ausgestaltung, zumindest weitestgehend selbsttätig erfolgen kann.

In einer vorteilhaften Ausgestaltung weisen die Magnetelemente eines jeden Verschlussteils mit entgegengesetzten Magnetpolen hin zu dem jeweils anderen Verschlussteil. Die zwei Magnetelemente des ersten Verschlussteils weisen somit mit unterschiedlichen Magnetpolen, nämlich einem Nordpol und einem Südpol, hin zu dem zweiten Verschlussteil. Genauso weisen die Magnetelemente des zweiten Verschlussteils mit entgegengesetzten Magnetpolen, nämlich einem Südpol und einem Nordpol, hin zu dem ersten Verschlussteil. Diese entgegengesetzte Polarisierung der Magnetelemente an jedem Verschlussteil stellt sicher, dass die Verschlussteile nur in genau einer Stellung aneinander angesetzt werden können, was ein falsches Ansetzen der Verschlussteile aneinander und eine gegebenenfalls unvollständige Verbindung der Verschlussteile miteinander zu vermeiden hilft.

Der Behälter kann beispielsweise als Flasche, Tasche oder als sonstiger Behälter ausgebildet sein. Der Behälter kann beispielsweise eine Trinkflasche, einen Werkzeugbehälter oder einen Behälter für eine Batterie verwirklichen. Der Behälter kann insbesondere als starres Gebilde (mit einem starren Körper) oder auch als flexibles Gewebe (beispielsweise als Tasche mit einem flexibel verformbaren Körper) ausgebildet sein.

Die Verschlussvorrichtung der vorangehend beschriebenen Art wird an einem Fahrrad verwendet, wobei ein solches Fahrrad durch menschliche Pedalkraft oder auch elektrisch angetrieben sein kann.

Der der Erfindung zugrunde liegende Gedanke soll nachfolgend anhand des in den Figuren dargestellten Ausführungsbeispiels näher erläutert werden. Es zeigen:
- Fig. 1: eine schematische Ansicht eines Fahrzeugs in Form eines Fahrrads;
- Fig. 2: eine Explosionsansicht einer Verschlussvorrichtung zum Befestigen eines Behälters an einem Rahmen des Fahrzeugs;
- Fig. 3: die Explosionsansicht, in einer Seitendarstellung;
- Fig. 4: eine Ansicht der Verschlussteile der Verschlussvorrichtung;
- Fig. 5A: eine Vorderansicht des Behälters mit einem daran angeordneten zweiten Verschlussteil;
- Fig. 5B: eine Schnittansicht entlang der Linie A-A gemäß Fig. 5A;
- Fig. 6A: die Vorderansicht gemäß Fig. 5A, bei zum Lösen des zweiten Verschlussteils von dem Behälter verdrehtem Befestigungselement; und
- Fig. 6B: eine Schnittansicht entlang der Linie A-A gemäß Fig. 6A.

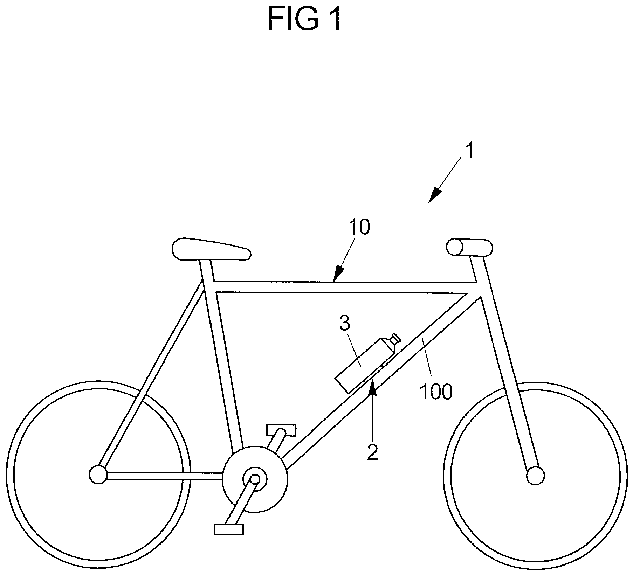

Fig. 1 zeigt in einer schematischen Ansicht ein Fahrzeug 1 in Form eines Fahrrads, das einen Rahmen 10 mit einer Rahmenstange 100 aufweist, an die über eine Verschlussvorrichtung 2 ein Behälter 3 beispielsweise in Form einer Trinkflasche oder eines anderen Behälters, z.B. einer Tasche, angesetzt ist.

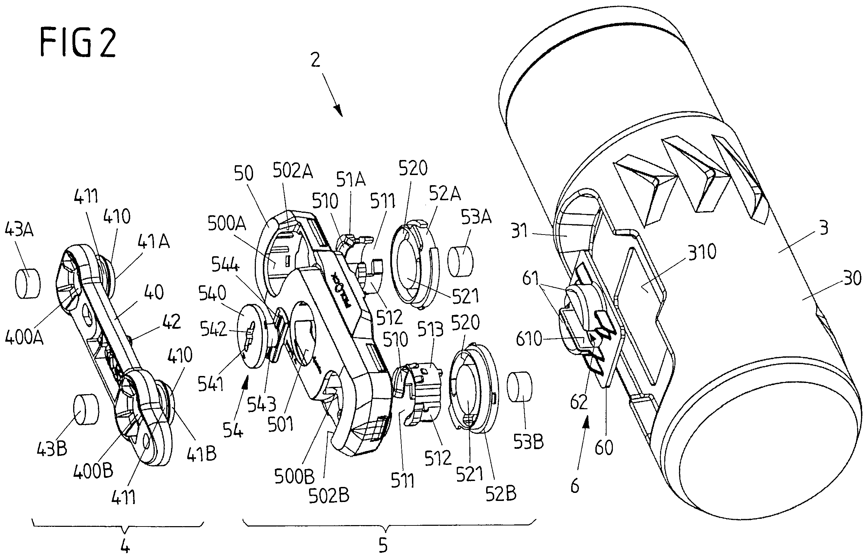

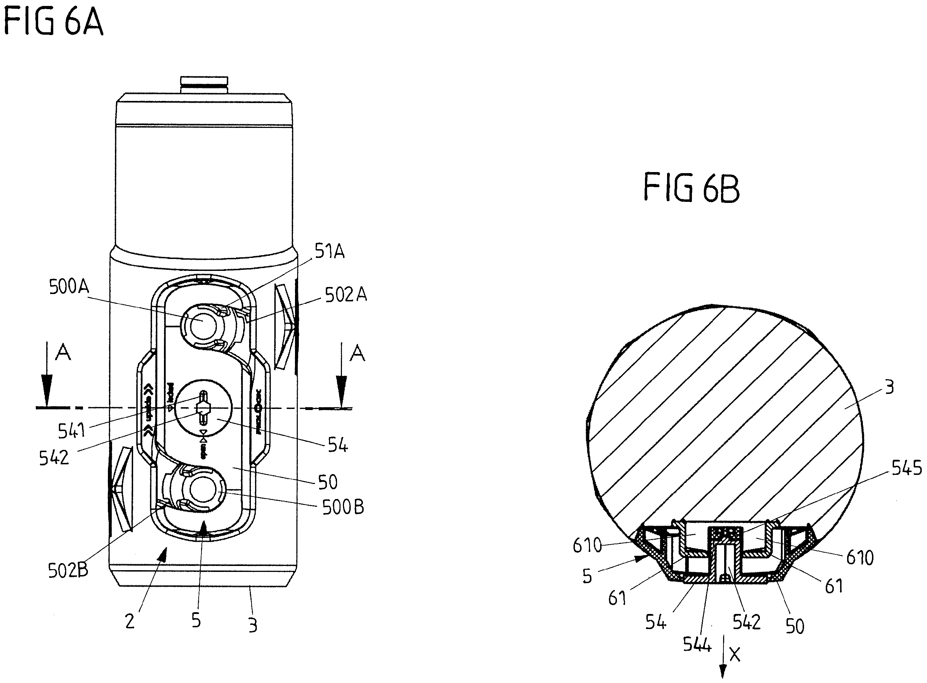

Fig. 2 bis 6A, 6B zeigen ein Ausführungsbeispiel einer Verschlussvorrichtung 2, die zum Verbinden eines Behälters 3 mit dem Rahmen 10 eines Fahrzeugs 1 dient. Die Verschlussvorrichtung 2 weist ein erstes Verschlussteil 4 auf, das fest mit einer Rahmenstange 100 des Rahmens 10 des Fahrzeugs 1 zu verbinden, beispielsweise zu verschrauben ist. An das erste Verschlussteil 4 kann ein zweites Verschlussteil 5 angesetzt werden, das fest mit dem Behälter 3 zu verbinden ist (dabei aber lösbar ist, wie nachfolgend noch erläutert werden soll). Durch Ansetzen des Behälters 3 mit dem daran befestigten zweiten Verschlussteil 5 an das an dem Rahmen 10 angeordnete erste Verschlussteil 4 kann der Behälter 3 somit an dem Rahmen 10 des Fahrzeugs 1 festgelegt werden.

Das erste Verschlussteil 4 weist einen Körper 40 auf, von dem zwei Sperrstücke 41A, 41B vorstehen. Die Sperrstücke 41A, 41B weisen jeweils einen Schaft 411 auf, an dessen vom Körper 40 abliegendem Ende ein Rastvorsprung 410 ausgebildet ist, der um den Schaft 411 umläuft und dabei radial von dem Schaft 411 nach außen hin vorsteht.

An der von den Sperrstücken 41A, 41B abgewandten Seite weist der Körper 40 Aufnahmeöffnungen 400A, 400B am Orte der Sperrstücke 41A, 41B auf, in die Magnetelemente 43A, 43B eingesetzt und fest mit dem Körper 40 verbunden sind.

Das zweite Verschlussteil 5 weist einen Körper 50 auf, in dem zwei Verschlussöffnungen 500A, 500B gebildet sind, in denen jeweils ein Verriegelungselement 51A, 51B über eine Befestigungsplatte 52A, 52B aufgenommen ist. Die Verriegelungselemente 51A, 51B sind in Befestigungsnuten 520 der Befestigungsplatten 52A, 52B aufgenommen und darin befestigt und umgreifen als erhabene Abschnitte ausgebildete Magnetaufnahmen 521, in denen jeweils ein Magnetelement 53A, 53B angeordnet ist.

Die Verriegelungselemente 51A, 51B sind ringförmig ausgebildet, dabei aber umfänglich über je eine Öffnung 511 geöffnet, sodass die Verriegelungselemente 51A, 51B C-Ringe darstellen. Jedes Verriegelungselement 51A, 51B ist derart an der zugeordneten Befestigungsplatte 52A, 52B festgelegt, dass das Verriegelungselement 51A, 51B elastisch federnd ist und insbesondere radial gespreizt werden kann, um einen Eingriff der Sperrstücke 41A, 41B des ersten Verschlussteils 4 in die Verriegelungselemente 51A, 51B des zweiten Verschlussteils 5 zu ermöglichen.

Jedes Verriegelungselement 51A, 51B weist einen innen umlaufenden (ggf. abschnittsweise unterbrochenen) Rastvorsprung 510 auf, der radial nach innen von einem Ringkörper 512 des Verriegelungselements 51A, 51B vorspringt. In der Schließstellung der Verschlussvorrichtung 2 sind die Rastvorsprünge 510 der Verriegelungselemente 51A, 51B mit den Rastvorsprüngen 410 der Sperrstücke 41A, 41B des ersten Verschlussteils 4 rastend in Eingriff, sodass die Verschlussteile 4, 5 formschlüssig aneinandergehalten sind.

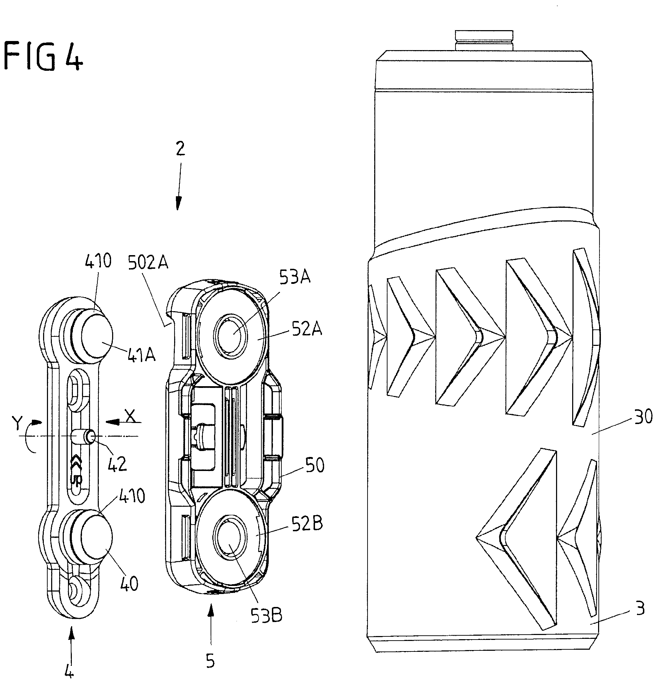

In montierter Stellung liegen die Verriegelungselemente 51A, 51B, gehalten über die Befestigungsplatten 52A, 52B, in den Verschlussöffnungen 500A, 500B des Körpers 50 des zweiten Verschlussteils 5 ein. Zum Schließen der Verschlussvorrichtung 2 kann das zweite Verschlussteil 5 in eine Schließrichtung X, wie in Fig. 4 dargestellt, an das erste Verschlussteil 4 angesetzt werden, wodurch die Sperrstücke 41A, 41B des ersten Verschlussteils 4 in die Verschlussöffnungen 500A, 500B und damit in die Verriegelungselemente 51A, 51B des zweiten Verschlussteils 5 eintauchen und dabei die Verriegelungselemente 51A, 51B durch Auflaufen der Rastvorsprünge 410, 510 aufeinander weiten, bis die Sperrstücke 41A, 41B mit den Verriegelungselementen 51A, 51B formschlüssig in Eingriff schnappen und dadurch das zweite Verschlussteil 5 an dem ersten Verschlussteil 4 festgelegt ist.

Durch die Magnetelemente 43A, 43B, 53A, 53B, die sich magnetisch anziehend gegenüberstehen, wird der Schließvorgang magnetisch unterstützt, sodass das Schließen der Verschlussvorrichtung 2 durch Annähern des zweiten Verschlussteils 5 an das erste Verschlussteil 4 weitestgehend selbsttätig erfolgen kann.

Während das Schließen der Verschlussvorrichtung 2 durch Ansetzen des zweiten Verschlussteils 5 in die Schließrichtung X an das erste Verschlussteil 4 erfolgt, kann die Verschlussvorrichtung 2 durch Verdrehen des mit dem Behälter 3 verbundenen zweiten Verschlussteils 5 zu dem ersten Verschlussteil 4 in eine um die Schließrichtung X gerichtete Öffnungsrichtung Y (Fig. 4) wieder geöffnet werden. Beim Verdrehen des zweiten Verschlussteils 5 in die Öffnungsrichtung Y zu dem ersten Verschlussteil 4 werden die Sperrstücke 41A, 41B durch die Öffnungen 511 der Verriegelungselemente 51A, 51B hindurch bewegt und gelangen durch die Verschlussöffnungen 500A, 500B seitlich öffnende Seitenöffnungen 502A, 502B aus dem Bereich der Verschlussöffnungen 500A, 500B heraus. Der formschlüssige Eingriff zwischen den Verschlussteilen 4, 5 ist somit aufgehoben, sodass das zweite Verschlussteil 5 von dem ersten Verschlussteil 4 entnommen werden kann.

Bei Ansetzen der Verschlussteile 4, 5 aneinander gelangt ein Drehzapfen 42, der von dem Körper 40 des ersten Verschlussteils 4 vorsteht (siehe zum Beispiel Fig. 4), mit einer Drehöffnung 542 an einem Befestigungselement 54 am Körper 50 des zweiten Verschlussteils 5 in Eingriff, worüber das zweite Verschlussteil 5 in die Öffnungsrichtung Y drehbar an dem ersten Verschlussteil 4 gelagert ist. Auf diese Weise wird die Öffnungsbewegung des zweiten Verschlussteils 5 relativ zu dem ersten Verschlussteil 4 geführt, was die Handhabung vereinfacht und insbesondere ein Verkanten der Verschlussteile 4, 5 beim Öffnen vermeidet.

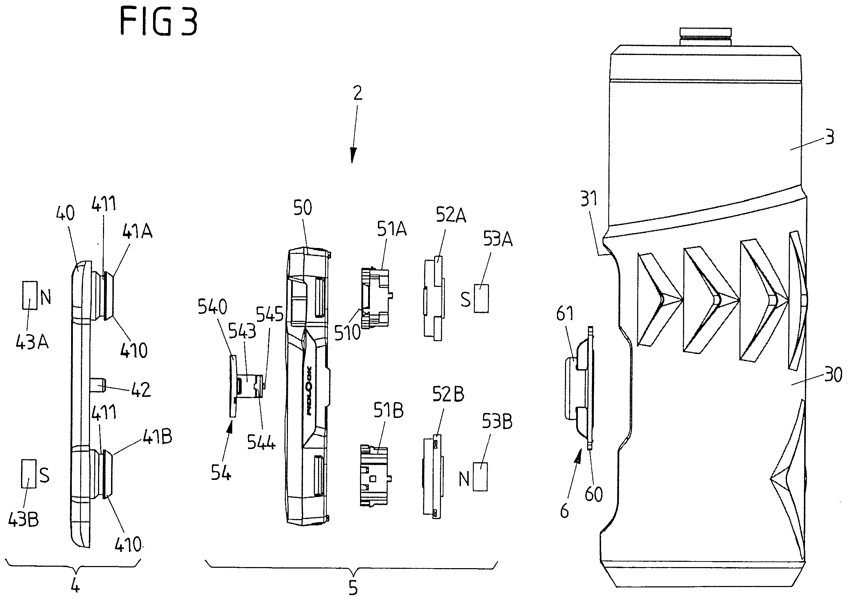

Wie in Fig. 3 dargestellt, weisen die Magnetelemente 43A, 43B, 53A, 53B eines jeden Verschlussteils 4, 5 mit unterschiedlichen Polen N, S zu dem jeweils anderen Verschlussteil 5, 4. So weisen die Magnetelemente 43A, 43B des ersten Verschlussteils 4 einerseits mit einem Nordpol N (Magnetelement 43A) und andererseits mit einem Südpol S (Magnetelement 43B) hin zu dem zweiten Verschlussteil 5. Umgekehrt weisen die Magnetelemente 53A, 53B des zweiten Verschlussteils 5 einerseits mit einem Südpol S (Magnetelement 43A) und andererseits mit einem Nordpol N (Magnetelement 53B) hin zu dem ersten Verschlussteil 4. Durch diese entgegengesetzte Polarisierung wird erreicht, dass die Verschlussteile 4, 5 nur in genau einer Stellung aneinander angesetzt werden können, wodurch sichergestellt ist, dass das Schließen der Verschlussvorrichtung bei vollständiger Verrastung der Sperrstücke 41A, 41B mit den Verriegelungselementen 51A, 51B zuverlässig erfolgen kann.

Beim Öffnen der Verschlussvorrichtung 2 werden auch die Magnetelemente 53A, 53B des zweiten Verschlussteils 5 relativ zu den Magnetelementen 43A, 43B des ersten Verschlussteils 4 bewegt, sodass die magnetische Anziehung zwischen den Magnetelementen 43A, 43B, 53A, 53B abgeschwächt wird und die Verschlussteile 4, 5 somit in leichter Weise voneinander entnommen werden können.

Das zweite Verschlussteil 5 ist an dem Behälter 3, beispielsweise einer Trinkflasche, festgelegt, sodass mit dem zweiten Verschlussteil 5 der Behälter 3 an dem ersten Verschlussteil 4 und damit an dem Rahmen 10 des Fahrzeugs 1 befestigt werden kann. Die Verbindung des zweiten Verschlussteils 5 mit dem Behälter 3 ist hierbei (bei geöffneter Verschlussvorrichtung 2) lösbar, indem das zweite Verschlussteil 5 mit seinem Körper 50 in eine Aufnahmevertiefung 31 an einem Körper 30 des Behälters 3 eingesetzt und über das Befestigungselement 54 mit einem Adapterteil 6 des Behälters 3 verbunden ist.

Das Befestigungselement 54 ist drehbar in einer Öffnung 501 des Körpers 50 des zweiten Verschlussteils 5 aufgenommen. Das Befestigungselement 54 weist hierbei einen Kopf 540 auf, von dem ein Schaft 543 mit einem daran angeordneten Arretiersteg 544 vorsteht. In den Kopf 540 ist ein Werkzeugeingriff in Form eines Schlitzes 541 eingeformt, sodass das Befestigungselement 54 beispielsweise durch Verwendung einer Münze in der Öffnung 501 des Körpers 50 des zweiten Verschlussteils 5 verdreht werden kann.

Das Adapterteil 6 ist fest mit dem Körper 30 des Behälters 3 verbunden. Dazu ist das Adapterteil 6 über ein Plattenelement 60 an einer Befestigungsfläche 310 in der Aufnahmevertiefung 31 aufgenommen und beispielsweise mit dem Körper 30 verschweißt oder verklebt. Von dem Plattenelement 60 stehen Arretierelemente 61 vor, die über einen Eingriffsschlitz 62 voneinander beabstandet sind und jeweils eine darin eingeformten Aussparung 610 aufweisen.

Zum Verbinden des zweiten Verschlussteils 2 mit dem Behälter 3 wird das Befestigungselement 54 in die in Fig. 6A, 6B dargestellte Stellung zu dem Körper 50 des zweiten Verschlussteils 5 gebracht, sodass der Arretiersteg 544 an dem Schaft 543 des Befestigungselements 54 bei Einsetzen des zweiten Verschlussteils 5 in die Aufnahmevertiefung 31 in den Eingriffsschlitz 62 zwischen den Arretierelementen 61 des Adapterteils 6 eintauchen kann. Bei Einsetzen gelangt das Befestigungselement 54 hierbei über einen Drehpunkt 545 in Auflage auf einen Abschnitt des Adapterteils 6, wie dies aus Fig. 6B ersichtlich ist.

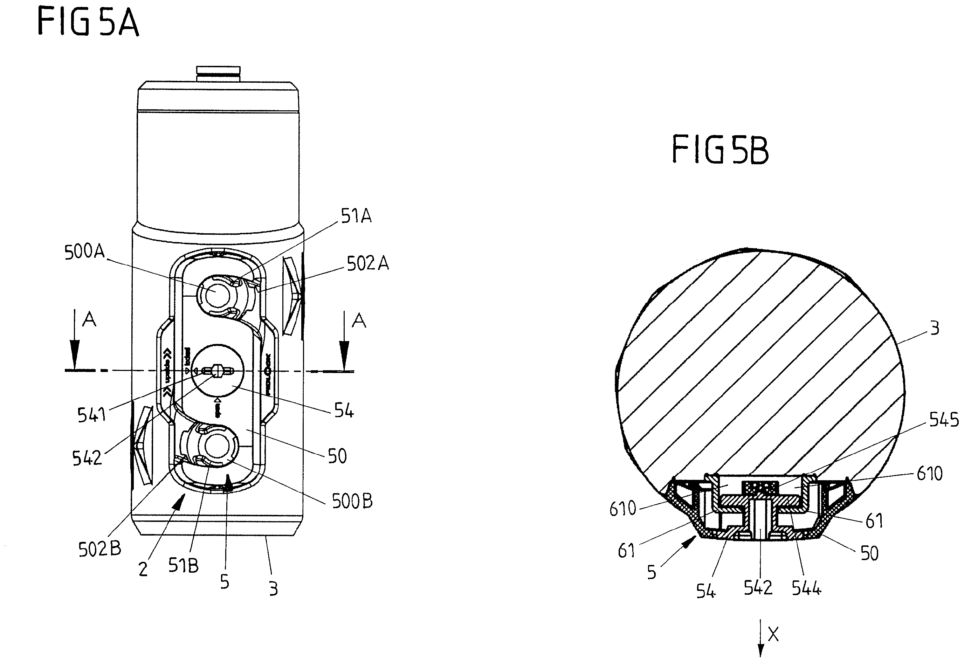

Durch Verdrehen des Befestigungselements 54 (z.B. unter Verwendung einer Münze, die in den Schlitz 541 am Kopf 540 des Befestigungselements 50 eingreift) wird sodann das Befestigungselement 54 in der Öffnung 501 des Körpers 50 des zweiten Verschlussteils 5 verdreht, sodass der Arretiersteg 544 in formschlüssigen Eingriff mit den Aussparungen 610 innerhalb der Arretierelemente 61 des Adapterteils 6 gelangt, wie dies aus Fig. 5A und 5B ersichtlich ist. Das zweite Verschlussteil 5 ist somit fest, aber lösbar an dem Adapterteil 6 des Behälters 3 festgelegt.

Ist das zweite Verschlussteil 5 an das erste Verschlussteil 4 angesetzt, so ist darüber auch der Behälter 3 an dem Rahmen 10 festgelegt.

Der Behälter 3 kann als Trinkflasche, als Aufbewahrungsbehälter für Werkzeug oder andere Gegenstände, z.B. für eine Batterie, ausgebildet sein. Der Behälter 3 kann aber auch als Tasche oder dergleichen verwirklicht sein.

Die Verschlussvorrichtung 2 kann zum Verbinden eines Behälters 3 mit einem Rahmen 10 eines Fahrzeugs 1, insbesondere eines Zweirads oder eines Dreirads, verwendet werden, wobei das Fahrzeug 1 durch menschliche Kraft oder auch elektrisch angetrieben sein kann.

Dadurch, dass das zweite Verschlussteil 5 lösbar an dem Behälter 3 festgelegt ist, kann der Behälter 3 ausgetauscht werden, was die Verwendung einer Verschlussvorrichtung 2 mit ganz unterschiedlichen Behältern 3 ermöglicht. So kann, wenn der Behälter 3 durch einen anderen Behälter ersetzt werden soll, das zweite Verschlussteil 5 in einfacher Weise von dem bisherigen Behälter 3 gelöst werden, um das zweite Verschlussteil 5 mit einem anderen Behälter zu verbinden und somit die Verschlussvorrichtung 2 wieder zu verwenden.

Dadurch, dass bei dem dargestellten Ausführungsbeispiel der Behälter 3 durch direktes Ansetzen der Verschlussteile 4, 5 aneinander zu schließen und durch Verdrehen des Behälters 3 wieder zu öffnen ist, ist vergleichsweise wenig Platz an dem Fahrzeug 1 für die Handhabung des Behälters 3 erforderlich (im Vergleich zu bekannten Behältern beispielsweise in Form von Trinkflaschen, die zum Ansetzen oder Lösen tangential entlang der Rahmenstange 100 zu bewegen sind). Die Verschlussvorrichtung 2 hält Behälter 3 zudem zuverlässig an dem Rahmen 10 und ist insbesondere auch unempfindlich gegen mechanische Stöße bei Benutzung des Fahrzeugs 1.

### Bezugszeichenliste

- 1: Fahrzeug (Fahrrad)
- 10: Rahmen
- 100: Rahmenstange
- 2: Verschlussvorrichtung
- 3: Behälter (Flasche)
- 30: Körper
- 31: Aufnahmevertiefung
- 310: Befestigungsfläche
- 4: Verschlussteil
- 40: Körper
- 400A, 400B: Aufnahmeöffnung
- 41A, 41B: Sperrstück
- 410: Rastvorsprung
- 411: Schaft
- 42: Drehzapfen
- 43A, 43B: Magnetelement
- 5: Verschlussteil
- 50: Körper
- 500A, 500B: Verschlussöffnung
- 501: Öffnung
- 502A, 502B: Seitenöffnung
- 51A, 51B: Verriegelungselement
- 510: Rastvorsprung
- 511: Öffnung
- 512: Ringkörper
- 52A, 52B: Befestigungsplatte
- 520: Befestigungsnut
- 521: Magnetaufnahme
- 53A, 53B: Magnetelement
- 54: Befestigungselement
- 540: Kopf
- 541: Schlitz
- 542: Drehöffnung
- 543: Schaft
- 544: Arretiersteg
- 545: Drehpunkt
- 6: Adapterteil
- 60: Plattenelement
- 61: Arretierelemente
- 610: Aussparung
- 62: Eingriffsschlitz
- N: Nordpol
- S: Südpol
- X: Schließrichtung
- Y: Öffnungsrichtung

## Patentansprüche

1. Fahrrad (1), mit einem Behälter (3) und einer Verschlussvorrichtung (2) zum Verbinden des Behälters (3) mit einem Rahmen (10) des Fahrrads (1), wobei die Verschlussvorrichtung (2) aufweist:
- einem ersten Verschlussteil (4), das an dem Rahmen (10) anzuordnen ist und ein erstes Magnetelement (43A, 43B) aufweist, und
- einem zweiten Verschlussteil (5), das dem Behälter (3) zugeordnet ist und ein zweites Magnetelement (53A, 53B) aufweist, wobei das zweite Verschlussteil (5) in eine Schließrichtung (X) an das erste Verschlussteil (4) ansetzbar und in einer Schließstellung mechanisch mit dem ersten Verschlussteil (5) verrastet ist,
**dadurch gekennzeichnet, dass** das zweite Verschlussteil (5) lösbar mit dem Behälter (3) verbindbar ist, wobei eines der Verschlussteile (4) zumindest ein Sperrstück (41A, 41B) und das andere der Verschlussteile (5) zumindest ein Verriegelungselement (51A, 51B) aufweist, wobei das zumindest eine Sperrstück (41A, 41B) in der Schließstellung in das Verriegelungselement (51A, 51B) derart eingreift, dass das zweite Verschlussteil (5) entgegen der Schließrichtung (X) an dem ersten Verschlussteil (4) gehalten ist, wobei das zweite Verschlussteil (5) durch Bewegen in eine Öffnungsrichtung (Y), die sich von der Schließrichtung (X) unterscheidet, von dem ersten Verschlussteil (4) lösbar ist, wobei die Öffnungsrichtung (Y) einer um die Schließrichtung (X) gerichteten Drehrichtung entspricht.

2. Fahrrad (1) nach Anspruch 1, **dadurch gekennzeichnet, dass** das zweite Verschlussteil (5) formschlüssig mit einem Adapterteil (6) des Behälters (3) verbindbar ist.

3. Fahrrad (1) nach Anspruch 1 oder 2, **dadurch gekennzeichnet, dass** das zweite Verschlussteil (5) einen Körper (50) und ein verstellbar, insbesondere drehbar an dem Körper (50) angeordnetes Befestigungselement (54) aufweist, das ausgebildet ist, in einer ersten Stellung das zweite Verschlussteil (5) mit dem Behälter (3) zu verbinden, und aus der ersten Stellung in eine zweite Stellung überführbar ist, um die Verbindung zwischen dem Behälter (3) und dem zweiten Verschlussteil (5) zu lösen.

4. Fahrrad (1) nach einem der vorangehenden Ansprüche, **dadurch gekennzeichnet, dass** das zumindest eine Verriegelungselement (51A, 51B) quer zur Schließrichtung elastisch federnd ausgebildet ist.

5. Fahrrad (1) nach einem der vorangehenden Ansprüche, **dadurch gekennzeichnet, dass** das zumindest eine Sperrstück (41A, 41B) einen ersten Rastvorsprung (410) und das zumindest eine Verriegelungselement (51A, 51b) einen zweiten Rastvorsprung (510) aufweisen, wobei der erste Rastvorsprung (410) und der zweite Rastvorsprung (510) in der Schließstellung formschlüssig miteinander in Eingriff stehen.

6. Fahrrad (1) nach einem der vorangehenden Ansprüche, **dadurch gekennzeichnet, dass** das zumindest eine Verriegelungselement (51A, 51B) ringförmig um die Schließrichtung (X) erstreckt ist, wobei das zumindest eine Verriegelungselement (51A, 51B) betrachtet entlang einer Umfangsrichtung um die Schließrichtung (X) durch eine Öffnung (511) geöffnet ist, durch die hindurch das zumindest eine Sperrstück (41A, 41B) zum Öffnen der Verschlussvorrichtung (2) bewegbar ist.

7. Fahrrad (1) nach einem der vorangehenden Ansprüche, **dadurch gekennzeichnet, dass** eines der Verschlussteile (4) einen Drehzapfen (42) aufweist, der in der Schließstellung mit einer Drehöffnung (542) des anderes Verschlussteils (5) in Eingriff steht und die Verschlussteile (4) entlang der Öffnungsrichtung (Y) drehbar aneinander lagert.

8. Fahrrad (1) nach einem der vorangehenden Ansprüche, **dadurch gekennzeichnet, dass** das erste Verschlussteil (4) zwei quer zur Schließrichtung (X) zueinander beabstandete, erste Magnetelemente (43A, 43B) und das zweite Verschlussteil (5) zwei quer zur Schließrichtung (X) zueinander beabstandete, zweite Magnetelemente (53A, 53B) aufweisen.

9. Fahrrad (1) nach Anspruch 8, **dadurch gekennzeichnet, dass** die Magnetelemente (43A, 43B, 53A, 53B) eines jeden Verschlussteils (4, 5) mit entgegengesetzten Magnetpolen (N, S) hin zu dem anderen Verschlussteil (5, 4) weisen.

10. Fahrrad (1) nach einem der vorangehenden Ansprüche, **dadurch gekennzeichnet, dass** der Behälter eine Getränkeflasche, ein Werkzeugbehälter oder ein Behälter für eine Batterie ist.

## Claims

1. A bicycle (1) comprising a container (3) and a closure device (2) for connecting the container (3) to a frame (10) of the bicycle (1), wherein the closure device (2) comprises
- a first closure part (4) which is to be arranged on the frame (10) and comprises a first magnet element (43A, 43B) and
- a second closure part (5) which is assigned to the container (3) and comprises a second magnet element (53A, 53B), wherein the second closure part (5) is positionable on the first closure part (4) in a closing direction (X) and is latched mechanically with the first closure part (5) in a closed position,
**characterized in that**
the second closure part (5) is releasably connectable to the container (3), wherein one of the closure parts (4) comprises at least one blocking piece (41A, 41B) and the other of the closure parts (5) at least one locking element (51A, 51B), wherein the at least one blocking piece (41A, 41B) engages in the locking element (51A, 51B) in the closed position in such a manner that the second closure part (5) is held on the first closure part (4) in opposition to the closing direction (X), wherein the second closure part (5) is releasable from the first closure part (4) as a result of moving in an opening direction (Y) which is different to the closing direction (X), wherein the opening direction (Y) corresponds to a rotational direction directed about the closing direction (X).

2. The bicycle (1) as claimed in claim 1, **characterized in that** the second closure part (5) is connectable in a positive locking manner to an adaptor part (6) of the container (3).

3. The bicycle (1) as claimed in claim 1 or 2, **characterized in that** the second closure part (5) comprises a body (50) and a fastening element (54) which is arranged so as to be adjustable, in particular rotatable, on the body (50) and is realized to connect the second closure part (5) to the container (3) in a first position, and is transferrable from the first position into a second position in order to release the connection between the container (3) and the second closure part (5).

4. The bicycle (1) as claimed in one of the preceding claims, **characterized in that** the at least one locking element (51A, 51B) is realized in an elastically resilient manner transversely to the closing direction.

5. The bicycle (1) as claimed in one of the preceding claims, **characterized in that** the at least one blocking piece (41A, 41B) comprises a first latching projection (410) and the at least one locking element (51A, 51b) comprises a second latching projection (510), wherein the first latching projection (410) and the second latching projection (510) engage one another in a positive locking manner in the closed position.

6. The bicycle (1) as claimed in one of the preceding claims, **characterized in that** the at least one locking element (51A, 51B) extends in a ring-shaped manner about the closing direction (X), wherein the at least one locking element (51A, 51B), viewed along a circumferential direction about the closing direction (X), is opened by an opening (511), through which the at least one blocking piece (41A, 41B) is movable for opening the closure device (2).

7. The bicycle (1) as claimed in one of the preceding claims, **characterized in that** one of the closure parts (4) comprises a pivot (42) which engages with a rotational opening (542) of the other closure part (5) in the closed position and mounts the closure parts (4) together so as to be rotational along the opening direction (Y).

8. The bicycle (1) as claimed in one of the preceding claims, **characterized in that** the first closure part (4) comprises two first magnet elements (43A, 43B) which are spaced apart from one another transversely to the closing direction (X) and the second closure part (5) comprises two second magnet elements (53A, 53B) which are spaced apart from one another transversely to the closing direction (X).

9. The bicycle (1) as claimed in claim 8, **characterized in that** the magnet elements (43A, 43B, 53A, 53B) of each closure part (4, 5) point toward the other closure part (5, 4) with opposite magnetic poles (N, S).

10. The bicycle (1) as claimed in one of the preceding claims, **characterized in that** the container is a drinking bottle, a tool container or a container for a battery.

## Revendications

1. Bicyclette (1), avec un contenant (3) et un dispositif de fermeture (2) pour relier le contenant (3) à un cadre (10) de la bicyclette (1), dans laquelle le dispositif de fermeture (2) présente :
- une première partie de fermeture (4), qui est à disposer sur le cadre (10) et qui présente un premier élément magnétique (43A, 43B), et
- une deuxième partie de fermeture (5), qui est associée au contenant (3) et qui présente un deuxième élément magnétique (53A, 53B), dans laquelle la deuxième partie de fermeture (5) peut être placée dans un sens de fermeture (X) sur la première partie de fermeture (4) et est enclenchée, dans une position de fermeture, mécaniquement avec la première partie de fermeture (5),
**caractérisée en ce que**
la deuxième partie de fermeture (5) peut être reliée de manière amovible au contenant (3),
dans laquelle
l'une des parties de fermeture (4) présente au moins une pièce de blocage (41A, 41B) et l'autre des parties de fermeture (5) présente au moins un élément de verrouillage (51A, 51B), dans laquelle l'au moins une pièce de blocage (41A, 41B) vient en prise dans la position de fermeture avec l'élément de verrouillage (51A, 51B) de telle manière que la deuxième partie de fermeture (5) est maintenue sur la première partie de fermeture (4) à l'opposé du sens de fermeture (X), dans laquelle la deuxième partie de fermeture (5) peut être détachée de la première partie de fermeture (4) par un déplacement dans un sens d'ouverture (Y), qui se distingue du sens de fermeture (X), dans laquelle le sens d'ouverture (Y) correspond à un sens de rotation dirigé autour du sens de fermeture (X).

2. Bicyclette (1) selon la revendication 1, **caractérisée en ce que** la deuxième partie de fermeture (5) peut être reliée par complémentarité de forme à une partie d'adaptateur (6) du contenant (3).

3. Bicyclette (1) selon la revendication 1 ou 2, **caractérisée en ce que** la deuxième partie de fermeture (5) présente un corps (50) et un élément de fixation (54) disposé de manière ajustable, en particulier de manière à pouvoir tourner sur le corps (50), qui est réalisé pour relier, dans une première position, la deuxième partie de fermeture (5) au contenant (3), et peut être transférée depuis la première position dans une deuxième position pour détacher la liaison entre le contenant (3) et la deuxième partie de fermeture (5).

4. Bicyclette (1) selon l'une quelconque des revendications précédentes, **caractérisée en ce que** l'au moins un élément de verrouillage (51A, 51B) est réalisé sur ressorts élastiquement de manière transversale par rapport au sens de fermeture.

5. Bicyclette (1) selon l'une quelconque des revendications précédentes, **caractérisée en ce que** l'au moins une pièce de blocage (41A, 41B) présente une première partie faisant saillie d'enclenchement (410) et l'au moins un élément de verrouillage (51A, 51B) présente une deuxième partie faisant saillie d'enclenchement (510), dans laquelle la première partie faisant saillie d'enclenchement (410) et la deuxième partie faisant saillie d'enclenchement (510) sont en prise l'une avec l'autre par complémentarité de forme dans la position de fermeture.

6. Bicyclette (1) selon l'une quelconque des revendications précédentes, **caractérisée en ce que** l'au moins un élément de verrouillage (51A, 51B) s'étend de manière annulaire autour du sens de fermeture (X), dans laquelle l'au moins un élément de verrouillage (51A, 51B) est ouvert vu le long d'un sens périphérique autour du sens de fermeture (X) à travers une ouverture (511), à travers laquelle l'au moins une pièce de blocage (41A, 41B) peut être déplacée pour ouvrir le dispositif de fermeture (2).

7. Bicyclette (1) selon l'une quelconque des revendications précédentes, **caractérisée en ce qu'**une des parties de fermeture (4) présente un tourillon rotatif (42), qui est en prise, dans la position de fermeture, avec une ouverture de rotation (542) de l'autre partie de fermeture (5) et monte les unes sur les autres de manière à pouvoir tourner les parties de fermeture (4) le long du sens d'ouverture (Y).

8. Bicyclette (1) selon l'une quelconque des revendications précédentes, **caractérisée en ce que** la première partie de fermeture (4) présente deux premiers éléments magnétiques (43A, 43B) tenus à distance l'un par rapport à l'autre de manière transversale par rapport au sens de fermeture (X) et la deuxième partie de fermeture (5) présente deux deuxièmes éléments magnétiques (53A, 53B) tenus à distance l'un par rapport à l'autre de manière transversale par rapport au sens de fermeture (X).

9. Bicyclette (1) selon la revendication 8, **caractérisée en ce que** les éléments magnétiques (43A, 43B, 53A, 53B) d'une quelconque partie de fermeture (4, 5) pointent vers l'autre partie de fermeture (5, 4) avec des pôles magnétiques (N, S) opposés.

10. Bicyclette (1) selon l'une quelconque des revendications précédentes, **caractérisée en ce que** le contenant est une bouteille de boisson, un contenant d'outil ou un contenant pour une batterie.
